# EUROPÄISCHE PATENTSCHRIFT

(11) **EP 1 325 938 B1**
(45) Veröffentlichungstag und Bekanntmachung des Hinweises auf die Patenterteilung: **15.03.2006**
(21) Anmeldenummer: 02028684.5
(22) Anmeldetag: 21.12.2002
(51) Int. Cl.: C08G 73/10, C08G 69/10, C07K 14/00, C07K 14/47

(54) **Verfahren zur Herstellung von copolymeren hydrophob modifizierten Polyglutaminsäurederivaten und ihre Verwendung**
Process for the preparation of copolymers of hydrophobic modified polyglutaminic acid derivatives and use thereof
Process de préparation de copolymères à base de dérivates d'acide polyglutaminique hydrophobe modifié et son utilisation

(30) Priorität: 03.01.2002 DE 10200075
(43) Veröffentlichungstag der Anmeldung: 09.07.2003
(73) Patentinhaber: Goldschmidt GmbH, 45127 Essen (DE)
(72) Erfinder: Dietz, Thomas, Dr., Glen Allen, VA 23060 (US); Messinger, Erika, 34454 Arolsen/Schmillinghausen (DE); Muss, Peter, 45359 Essen (DE); Schick, Ute, Dr., 50676 Köln (DE); Weitemeyer, Christian, Dr., 45134 Essen (DE); Zündorff, Astrid, 45147 Essen (DE)

(56) Entgegenhaltungen:
- EP-A- 0 958 811
- US-A- 3 052 655

## Beschreibung

Gegenstand der Erfindung sind hydrophob modifizierte copolymere Polyglutaminsäurederivate und ein Verfahren zu deren Herstellung durch Kondensation von Glutaminsäure oder deren Derivaten mit Aminen und Coaminosäuren sowie die Verwendung der hergestellten Verbindungen.

Polypeptide, aufgebaut aus den natürlich vorkommenden Aminosäuren, sind leicht biologisch abbaubar und toxikologisch unbedenklich. Sie sind wertvolle Zusatzstoffe, welche aufgrund ihrer Eigenschaften besondere Aufmerksamkeit gefunden haben und in zunehmendem Maße Verwendung finden.

Je nach Amidierungsgrad und Hydrophobie der Aminkomponente zeichnen sich Polyglutaminsäureamide neben ihrer toxikologischen Unbedenklichkeit, ihrer ausgesprochenen Mildheit und biologischen Abbaubarkeit durch hervorragende Eigenschaften als Filmbildner und Überzugsmittel insbesondere in der Pharmazie und im Lebensmittelbereich aus. Weiterhin werden Anwendungen als biologisch abbaubare Komplexierungsmittel, Enthärter und Waschmittel-Builder vorgeschlagen.

In der Literatur werden eine Vielzahl von Polypeptiden und Verfahren zu deren Herstellung beschrieben, insbesondere solcher auf Basis von Asparaginsäure.

In der US-A-5 057 597 wird die thermische Polymerisation von fester Asparaginsäure in einem Fließbett- oder Wirbelbettreaktor bei Temperaturen von mindestens 180 °C bis 250 °C beschrieben, wobei die Reaktionsmischung während des gesamten Verfahrens rieselfähig bleibt.

In der US-A-3 052 655 wird die, Herstellung von copolymeren Polypeptiden beschrieben, welche neben Asparaginsäure noch eine oder mehrere andere α-Aminosäuren enthalten können. Zur Herstellung einer flüssigen Reaktionsmischung ist die Zugabe von äquimolarer Menge, bezogen auf die Gesamtmenge der Aminosäuren, an konzentrierter Phosphorsäure erforderlich.

Aus der DE-A-36 12 102 sind lösliche und biologisch abbaubare copolymere Polypeptidamide, die in der Hauptkette Asparaginsäure und/oder Glutaminsäureeinheiten und Einheiten anderer Aminosäuren enthalten und in denen der Kohlenwasserstoffrest des Amidteils 3 bis 7 C-Atome haben kann, bekannt. Diese Verbindungen weisen Molmassen von 5.000 bis 1.000.000 auf und werden nach Umsetzung mit Aminoalkoholen oder Hydrazin zur Bindung biologisch aktiver Stoffe eingesetzt.

Die EP-A-0 959 091 betrifft copolymere Polyasparaginsäureesteramide, welche mit Alkyl- oder Alkenylresten mit 6 bis 30 C-Atomen modifiziert sind, ihre Herstellung sowie ihre Verwendung. Bedingt durch das Herstellungsverfahren der Polyasparaginsäure, worin im ersten Schritt Maleinsäurehalbester mit Ammoniak umgesetzt werden und nachfolgender (teilweiser) Hydrolyse der Esterbindungen, gefolgt von der Amidierung der freien Carboxylgruppen, enthalten die Verfahrensprodukte immer noch Esterbindungen.

Gemäß DE-A-39 21 912 können Umsetzungsprodukte aus Polysuccinimid und Aminen mit 1 bis 8 C-Atomen im Kohlenwasserstoffrest, welche neben den Amidgruppen noch Imidgruppen und gegebenenfalls freie Carboxylgruppen bzw. deren Ammoniumsalze enthalten, als Überzugsmittel und/oder Retardierungsmittel für Arzneimittel und Lebensmittel verwendet werden. Die Amidierung des Polysuccinimids erfolgt in Dimethylformamid (DMF) als Lösungsmittel, welches hinterher durch aufwändige Verfahrensschritte und großen Mengen weniger bedenklicher Lösungsmittel wieder entfernt werden muss.

Eine Aufgabe der vorliegenden Erfindung bestand daher darin, einfachere und effektivere Verfahren zur Herstellung von gegebenenfalls copolymeren Polypeptiden, insbesondere auf Basis von Glutaminsäure und Asparaginsäure, bereitzustellen, welche durch einfache Variation der Edukte und/oder Reaktionsparameter Polymere mit vorbestimmter Verteilung der Monomeren im Molekül, das heißt, von statistischer Verteilung bis zur beliebigen Blockbildung sowie die Einstellung maßgeschneiderter Molekulargewichte erlaubt.

Es wurde nun gefunden, dass diese Aufgabe gelöst wird durch ein Verfahren zur Herstellung von gegebenenfalls copolymeren Polypeptiden durch gleichzeitige oder stufenweise Umsetzung von Glutaminsäure und mindestens einer weiteren α-Aminosäure und/oder deren Derivaten, mit Aminen, in Abwesenheit von Lösungsmitteln und Katalysatoren, unter Kondensationsbedingungen, gegebenenfalls bei subatmosphärischem Druck und Entfernung des Kondensats aus der Reaktionsmischung.

Ein Gegenstand der Erfindung ist daher ein Verfahren zur Herstellung von copolymeren Polypeptiden, welches dadurch gekennzeichnet ist, dass in erster Stufe Glutaminsäure und/oder deren Derivate in Abwesenheit von Lösungsmitteln und Katalysatoren, unter Kondensationsbedingungen mit Aminen, gegebenenfalls bei subatmosphärischem Druck und Entfernung des Kondensats, aus der Reaktionsmischung umgesetzt werden und dass in zweiter Stufe eine oder mehrere weitere Aminosäuren und/oder deren Derivate und/oder ein oder mehrere gleiche und/oder weitere Amine gleichzeitig oder in beliebiger Reihenfolge zugesetzt und in Abwesenheit von Lösungsmitteln und Katalysatoren, mit dem Reaktionsprodukt der ersten Stufe umgesetzt werden.

Ein weiterer Gegenstand der Erfindung ist ein Verfahren zur Herstellung von gegebenenfalls copolymeren Polypeptiden, welches dadurch gekennzeichnet ist, dass in erster Stufe Glutaminsäure und/oder deren Derivate mit einer oder mehreren weiteren α-Aminosäuren und/oder deren Derivaten, in Abwesenheit von Lösungsmitteln und Katalysatoren, unter Kondensationsbedingungen, gegebenenfalls bei subatmosphärischem Druck und Entfernung des Kondensats, aus der Reaktionsmischung umgesetzt werden und dass in zweiter Stufe ein oder mehrere Amine gleichzeitig oder in beliebiger Reihenfolge in Abwesenheit von Lösungsmitteln und Katalysatoren, unter Kondensationsbedingungen, gegebenenfalls bei subatmosphärischem Druck und Entfernung des Kondensats, aus der Reaktionsmischung mit dem Reaktionsprodukt der ersten Stufe umgesetzt werden.

Ein weiterer Gegenstand der Erfindung ist ein Verfahren zur Herstellung von gegebenenfalls copolymeren Polypeptiden, welches dadurch gekennzeichnet ist, dass in erster Stufe Glutaminsäure und/oder deren Derivate mit einer oder mehreren weiteren α-Aminosäuren und/oder deren Derivaten, mit einem oder mehreren Aminen gleichzeitig oder in beliebiger Reihenfolge in Abwesenheit von Lösungsmitteln und Katalysatoren, unter Kondensationsbedingungen, gegebenenfalls bei subatmosphärischem Druck und Entfernung des Kondensats, aus der Reaktionsmischung umgesetzt werden und dass in zweiter Stufe Glutaminsäure und/oder eine oder mehrere weitere Coaminosäuren und/oder deren Derivate und/oder ein oder mehrere gleiche und/oder weitere Amine gleichzeitig oder in beliebiger Reihenfolge in Abwesenheit von Lösungsmitteln und Katalysatoren, unter Kondensationsbedingungen, gegebenenfalls bei subatmosphärischem Druck und Entfernung des Kondensats aus der Reaktionsmischung, mit dem Reaktionsprodukt der ersten Stufe umgesetzt werden.

Ein weiterer Gegenstand der Erfindung ist ein Verfahren zur Herstellung von gegebenenfalls copolymeren Polypeptiden, welches dadurch gekennzeichnet ist, dass in erster Stufe mindestens eine Aminosäure und/oder deren Derivate mit Aminen in einem Verhältnis gemischt werden, dass die Mischungen bei Kondensationstemperatur flüssig sind und in Abwesenheit von Lösungsmitteln und Katalysatoren auf mindestens Schmelztemperatur aufgeheizt werden und in zweiter Stufe gegebenenfalls weitere Coaminosäuren und/oder Amine gleichzeitig oder in beliebiger Reihenfolge zudosiert werden und unter Kondensationsbedingungen, gegebenenfalls bei subatmosphärischem Druck und unter Entfernung des Kondensats, aus der Reaktionsmischung mit der Mischung oder dem Reaktionsprodukt der ersten Stufe umgesetzt werden.

Die erfindungsgemäßen Copolymere bestehen zu 30 bis 90 Gew.-% der vorhandenen Einheiten aus Struktureinheiten der allgemeinen Formel (I) und zu 70 bis 30 Gew.-% der allgemeinen Formel (II) 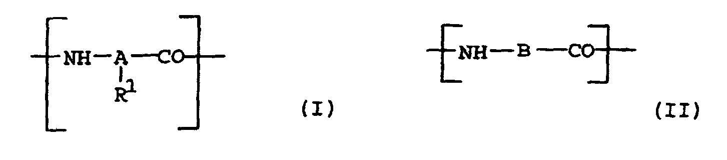
worin
- A: ein trifunktionelles Radikal mit drei C-Atomen und den Strukturen ist 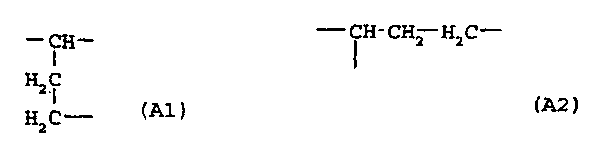
und in denen
- R¹: die Bedeutung von R², R³ und R⁴ haben kann,
wobei
R² gleiche oder verschiedene Amidreste -C(O)NH-R⁹ mit
R⁹ geradkettige oder verzweigte, gesättigte und ungesättigte Alkylreste mit 1 bis 24, vorzugsweise 6 bis 24 C-Atomen oder Radikale der Struktur -C(O)NH-X-R⁹ sind, wobei
X eine Oligo- oder Polyoxyalkylenkette mit 1 bis 100 Oxyalkyleneinheiten, vorzugsweise Ethlenoxydeinheiten, ist,
R³ gleiche oder verschiedene Amidreste -C(O)NH-(CH₂)ₙ-N(R¹⁰)(R¹¹) mit
n 2 bis 10, vorzugsweise 2 bis 4 und
R¹⁰, R¹¹ unabhängig voneinander geradkettige oder verzweigte, gesättigte oder ungesättigte Alkylreste mit 1 bis 24 C-Atomen und/oder Hydroxyalkylreste sind
R⁴ die Bedeutung COO⁻X⁺ mit
X⁺ ein oder mehrere Reste aus der Gruppe der Alkali-, Erdalkalimetalle, Wasserstoff oder Ammonium, [NR⁵R⁶R⁷R⁸]⁺, hat, worin
R⁵ bis R⁸ unabhängig voneinander Wasserstoff, Alkyl oder Hydroxyalkyl oder [NH₃-X-R⁹]⁺, und/oder [NH₃-R⁹]⁺, und/oder [NH₃-(CH₂)ₙ-N(R¹⁰)(R¹¹)]⁺, bedeuten,

und mindestens jeweils ein Rest R¹ die Bedeutung von R², R³ und/oder R⁴ annehmen muss und die Einheiten [-NH-B-CO-] Bausteine aus der Gruppe der proteinogenen und/oder nicht proteinogenen Aminosäuren (H₂N-B-COOH) sind, worin B der Rest der jeweiligen Aminosäure ist.

Als Aminosäurebausteine [-NH-B-CO] aus der Gruppe der proteinogenen Aminosäuren H₂N-B-COOH kommen z. B. Glycin, Alanin, Leucin, Isoleucin, Phenylalanin, Tyrosin, Serin, Cystein, Methionin, Glutaminsäure, Glutamin, Asparaginsäure, Asparagin, Lysin, Hydroxylysin, Arginin, Tryptophan, Histidin, Valin, Threonin, Prolin, Hydroxyprolin sowie deren Derivate in Frage; nicht proteinogene Aminosäuren können z. B. β-Alanin, ω-Amino-1-alkansäuren etc. sein.

Als erfindungsgemäß mitverwendbare Amine kommen Verbindungen in Betracht, die mindestens eine mit Carboxylgruppen reaktionsfähige Aminogruppe enthalten, wie beispielsweise: NH₂-R⁹ und/oder NH₂-X-R⁹ und/oder NH₂-(CH₂)ₙ-N(R¹⁰)(R¹¹) worin R⁹, R¹⁰, R¹¹, X und ₙ die oben angegebene Bedeutung haben.

Vorzugsweise werden solche Verbindungen eingesetzt, welche bei den gegebenen Reaktionsbedingungen flüssig sind und nicht aus dem Reaktionsgemisch abdestillieren. Das sind die höheren Amine mit 6 oder mehr C-Atomen in der Alkylkette wie die homologe Reihe der Fettamine NH₂-R⁹.

Diese Fettamine werden nach bekannten Verfahren durch Umsetzung von Fettsäuren mit NH₃ in Gegenwart von Katalysatoren zum Nitril und anschließender Hydrierung zum primären oder sekundären Amin hergestellt.

Als Fettsäuren werden hierzu einzeln oder in Mischungen Säuren wie Caprylsäure, Caprinsäure, 2-Ethyl-hexansäure, Laurinsäure, Myristinsäure, Palmitinsäure, Palmitoleinsäure, Isostearinsäure, Stearinsäure, Hydroxystearinsäure (Ricinolsäure), Dihydroxystearinsäure, Ölsäure, Linolsäure, Petroselinsäure, Elaidinsäure, Arachinsäure, Behensäure und Erucasäure, Gadoleinsäure sowie die bei der Druckspaltung natürlicher Fette und Öle anfallenden technischen Mischungen wie Ölsäure, Linolsäure, Linolensäure, und insbesondere Rapsölfettsäure, Sojaölfettsäure, Sonnenblumenölfettsäure, Tallölfettsäure mitverwendet. Geeignet sind prinzipiell alle Fettsäuren mit ähnlicher Kettenverteilung.

Der Gehalt dieser Fettsäuren bzw. Fettsäureester an ungesättigten Anteilen, wird - soweit dies erforderlich ist - durch die bekannten katalytischen Hydrierverfahren auf eine gewünschte Jodzahl eingestellt oder durch Abmischung von vollhydrierten mit nichthydrierten Fettkomponenten erzielt. Die Jodzahl, als Maßzahl für den durchschnittlichen Sättigungsgrad einer Fettsäure, ist die Jodmenge, welche von 100 g der Verbindung zur Absättigung der Doppelbindungen aufgenommen wird.

Vorzugsweise werden teilgehärtete C₈₋₁₈-Kokos- bzw. Palmfettsäuren, Rapsölfettsäuren, Sonnenblumenölfettsäuren, Sojaölfettsäuren und Tallölfettsäuren, mit Jodzahlen im Bereich von ca. 80 bis 150 und insbesondere technische C₈₋₁₈-Kokosfettsäuren eingesetzt, wobei gegebenenfalls eine Auswahl von cis-/trans-Isomeren wie elaidinsäurereiche C₁₆₋₁₈-Fettsäureschnitte von Vorteil sein können. Sie sind handelsübliche Produkte und werden von verschiedenen Firmen unter deren jeweiligen Handelsnamen angeboten.

Weitere mitverwendbare Amine sind solche der allgemeinen Formel NH₂-(CH₂)ₙ-N(R¹⁰)(R¹¹), welche neben einer primären Aminogruppe noch mindestens eine sekundäre oder vorzugsweise tertiäre Aminogruppe enthalten, wie insbesondere Dimethylaminopropylamin (DMAPA) .

Weitere mitverwendbare Amine sind solche der allgemeinen Formel NH₂-X-R⁹ wie insbesondere die von der Firma Huntsman unter dem Markennamen Jeffamine® vertriebenen Verbindungen.

Weitere mitverwendbare Amine sind Imidazolinringe enthaltende Verbindungen wie beispielsweise die, die aus den oben angeführten Fettsäuren und Diethylentriamin nach bekannten Methoden hergestellt werden.

In den erfindungsgemäß hergestellten Verbindungen ist das Verhältnis Glutaminsäure/Coaminosäure: 90 : 10 bis 30 : 70 Gew.-% vorzugsweise 90 : 10 bis 50 : 50 Gew.-% und das Verhältnis Aminosäuren/Amin: 90 : 10 bis 30 : 70 Gew.-%, vorzugsweise 40 : 60 bis 60 : 40.

### Herstellungsverfahren:

In einer ersten Stufe wird beispielsweise Glutaminsäure bei 170 bis 190 °C geschmolzen, wobei sich durch Abspaltung von Wasser das cyclische Amid, die Pyroglutaminsäure, bildet. Man gibt dann Asparaginsäure und/oder andere Coaminosäuren zu und erhitzt die Schmelze weiterhin bei derselben Temperatur. Das entstehende Reaktionswasser wird kontinuierlich abdestilliert. Je länger die Dauer des Erhitzens und je höher die Temperatur, desto größer ist die Molekularmasse des entstehenden Peptids. Dieses Peptid kann auch in einem stufenlosen Verfahren hergestellt werden, wobei Coaminosäure, Glutaminsäure und gegebenenfalls weitere Aminosäuren gleichzeitig bei derselben Temperatur erwärmt und polymerisiert werden.

Im nächsten Schritt werden Amine zu dem Peptid zugegeben und bei 170 bis 190 °C weiterreagiert. Die entstandene Schmelze wird entweder ausgegossen und nach dem Abkühlen zerkleinert, oder direkt im Anschluss mit wässrigen Basen, z.B. wässrige Natronlauge, behandelt. Die so entstandene Suspension kann entweder direkt weiterverwendet werden oder isoliert werden.

In einer Verfahrensvariante wird nach der Glutaminsäure, das Amin zugegeben und erst im darauffolgenden Schritt Asparaginäure und/oder andere Coaminosäuren dazugegeben.

In einer weiteren Verfahrensvariante können alle Komponenten zusammengemischt und unter den angegebenen Bedingungen zur Reaktion gebracht werden.

### Durchführungsbeispiele:

### Beispiel 1:

In einem 2-l-Planschliffkolben, ausgestattet mit Ölbad, Rührer, Thermometer und Destillationsbrücke, werden 221 g Glutaminsäure und 200 g Asparaginsäure unter geringem Stickstoffstrom vorgelegt und auf 180 °C erwärmt. Das entstehende Reaktionswasser wird über die Destillationsbrücke abdestilliert und kondensiert.

Nachdem 54 g Wasser abdestilliert werden gibt man anschließend innerhalb einer halbe Stunde 105 g Stearylamin (Armeen 18 D von Akzo Nobel) langsam zu und rührt noch eine halbe Stunde bei derselben Temperatur. Bei 140 °C wird solange eine 25 %ige Natronlauge zugegeben bis ein pH-Wert von 5 eingestellt ist. Das Produkt kann durch Zugabe von 1 g Aminoiminomethansulfinsäure bei 80 °C eine Stunde gebleicht werden. Anschließend werden 10 g 30 %ige wasserstoffperoxidlösung zugegeben und nochmals eine Stunde bei 80 °C gerührt.

Das Produkt wird am Rotationsverdampfer eingeengt. Die Restmengen der Aminosäuren können über HPLC bestimmt werden. Man erhält eine hellbeige 50 %ige Suspension mit ca. 5 % freie Asparaginsäure und 18 % Pyro-Glutaminsäure.

### Beispiel 2:

In einem 2-l-Planschliffkolben, ausgestattet mit Ölbad, Rührer, Thermometer und Destillationsbrücke, werden 80 g Glutaminsäure. 320 g Asparaginsäure und 100 g Stearylamin (Armeen 18 D von Akzo Nobel) unter geringem Stickstoffstrom vorgelegt und auf 190 °C erwärmt. Nach 1,5 h wird die Temperatur auf 220 °C erhöht und weitere 2,5 h gerührt. Das entstehende Reaktionswasser (53 g) wird über die Destillationsbrücke abdestilliert und kondensiert.

Bei 140 °C wird solange eine 25 %ige Natronlauge und Wasser zugegeben bis ein pH-Wert von 7 eingestellt ist. Das Produkt kann durch Zugabe von 1 g Aminoiminomethansulfinsäure bei 80 °C innerhalb einer Stunde gebleicht werden. Anschließend werden 10 g 30 %ige Wasserstoffperoxidlösung zugegeben und nochmals eine Stunde bei 80 °C gerührt.

Das Produkt wird am Rotationsverdampfer eingeengt. Die Restmengen der Aminosäuren können über HPLC bestimmt werden. Man erhält eine hellbeige 29 %ige Suspension mit ca. 14 % freie Asparaginsäure, 2 % Glutaminsäure und 3 % Pyro-Glutaminsäure.

### Beispiel 3:

In einem 2-l-Planschliffkolben, ausgestattet mit Ölbad, Rührer, Thermometer und Destillationsbrücke werden 250 g Glutaminsäure unter geringem Stickstoffstrom vorgelegt und auf 180 °C erwärmt. Das entstehende Reaktionswasser wird über die Destillationsbrücke abdestilliert und kondensiert (30 g). Nach 1,5 h wird 119 g Stearylamin zugegeben und 0,5 h bei 180 °C gerührt. Danach werden 226 g Asparaginsäure zugegeben und nach 1 h sind 26 g Wasser abdestilliert.

Bei 150 °C wird solange eine 25 %ige Natronlauge zugegeben bis ein pH-Wert von 5 eingestellt ist. Nach Einengen am Rotationsverdampfer erhält man ein hellgelbes Pulver. Die Restmengen der Aminosäuren können über HPLC bestimmt werden. Man erhält ein modifiziertes Peptid mit 21 % freier Asparaginsäure, 18 % Pyro-Glutaminsäure und 4 % freie Glutaminsäure.

### Beispiel 4:

In einem 2-l-Planschliffkolben, ausgestattet mit Ölbad, Rührer, Thermometer und Destillationsbrücke, werden 500 g Glutaminsäure und 45 g Asparaginsäure unter geringem Stickstoffstrom vorgelegt und auf 220 °C erwärmt. Das entstehende Reaktionswasser wird über die Destillationsbrücke abdestilliert und kondensiert.(67 g).

Anschließend gibt man innerhalb einer halben Stunde 105 g Stearylamin (Armeen 18 D von Akzo Nobel) langsam zu. Bei 140 °C wird solange eine 25 %ige Natronlauge zugegeben bis ein pH-Wert von 7 eingestellt ist.

Das Produkt wird am Rotationsverdampfer eingeengt. Die Restmengen der Aminosäuren können über HPLC bestimmt werden. Man erhält ein gelbes Pulver mit ca. 2 % freier Glutaminsäure und 50 % Pyro-Glutaminsäure.

### Beispiel 5:

In einem 2-l-Planschliffkolben, ausgestattet mit Ölbad, Rührer, Thermometer und Destillationsbrücke, werden 74 g Glutaminsäure und 67 g Asparaginsäure unter geringem Stickstoffstrom vorgelegt und auf 180 °C erwärmt. Das entstehende Reaktionswasser wird über die Destillationsbrücke abdestilliert und kondensiert (18 g).

Anschließend gibt man innerhalb einer halben Stunde 270 g Stearylamin (Armeen 18 D von Akzo Nobel) langsam zu und rührt noch 0,5 Stunden bei 150 °C. Bei 140 °C wird solange eine 25 %ige Natronlauge zugegeben bis ein pH-Wert von 7 eingestellt ist. Das Produkt wird am Rotationsverdampfer eingeengt. Die Restmengen der Aminosäuren können über HPLC bestimmt werden. Man erhält ein modifiziertes Peptid mit ca. 2 % freier Asparaginsäure und 5 % Pyro-Glutaminsäure.

### Beispiel 6:

In einem 2-l-Planschliffkolben, ausgestattet mit Ölbad, Rührer, Thermometer und Destillationsbrücke, werden 221 g Glutaminsäure und 200 g Asparaginsäure unter geringem Stickstoffstrom vorgelegt und auf 180°C erwärmt. Das entstehende Reaktionswasser wird über die Destillationsbrücke abdestilliert und kondensiert.

Nachdem 54 g Wasser abdestilliert werden; gibt man innerhalb einer Stunde 307 g Dimethylaminopropylamin langsam zu und rührt noch eine Stunde bei derselben Temperatur. Man erhält eine braune Lösung, die nach dem Abkühlen hochviskos und klebrig ist.

### Beispiel 7:

In einem 2-l-Planschliffkolben, ausgestattet mit Ölbad, Rührer, Thermometer und Destillationsbrücke, werden 200 g Glutaminsäure und 200 g Asparaginsäure unter geringem Stickstoffstrom vorgelegt und auf 180 °C erwärmt. Das entstehende Reaktionswasser wird über die Destillationsbrücke abdestilliert und kondensiert.

Nachdem 52 g Wasser abdestilliert werden; gibt man innerhalb einer halbe Stunde 100 g Stearylamin (Armeen 18 D von Akzo Nobel) langsam zu und rührt noch eine halbe Stunde bei derselben Temperatur. 100 g Glycin werden anschließend innerhalb einer halben Stunde zugegeben und wiederum eine halbe Stunde bei gleichbleibender Temperatur gerührt. Bei 140°C wird solange eine 25 %ige Natronlauge zugegeben bis ein pH-Wert von 7 eingestellt ist. Man erhält eine braune Suspension mit ca. 54 % Festkörpergehalt.

### Beispiel 8:

In einem 2-l-Planschliffkolben, ausgestattet mit Ölbad, Rührer, Thermometer und Destillationsbrücke, werden 200 g Glutaminsäure und 181 g Asparaginsäure unter geringem Stickstoffstrom vorgelegt und auf 180 °C erwärmt. Das entstehende Reaktionswasser wird über die Destillationsbrücke abdestilliert und kondensiert.

Nachdem 48 g Wasser abdestilliert werden, wird eine halbe Stunde bei derselben Temperatur gerührt. Anschließend gibt man innerhalb einer halben Stunde 95 g Polyoxyalkylenamin (Jeffamin M-600 von Huntsman) langsam zu und rührt noch eine halbe Stunde bei derselben Temperatur. Bei 140 °C wird solange eine 25 %ige Natronlauge zugegeben bis ein pH-Wert von 5 eingestellt ist. Das Produkt kann durch Zugabe von 1 g Aminoiminomethansulfinsäure bei 80 °C eine Stunde gebleicht werden. Anschließend werden 10 g 30 %ige Wasserstoffperoxidlösung zugegeben und nochmals eine Stunde bei 80 °C gerührt. Das Produkt wird am Rotationsverdampfer eingeengt. Die Restmengen der Aminosäuren können über HPLC bestimmt werden. Man erhält eine 53 %ige klare hellbraune Lösung mit ca. 5 % freier Asparaginsäure und 22 % Pyro-Glutaminsäure.

## Patentansprüche

1. Verfahren zur Herstellung von copolymeren Polypeptiden **dadurch gekennzeichnet, dass** in erster Stufe Glutaminsäure und/oder deren Derivate in Abwesenheit von Lösungsmitteln und Katalysatoren, unter Kondensationsbedingungen mit Aminen umgesetzt werden und dass in zweiter Stufe eine oder mehrere weitere Aminosäuren und/oder deren Derivate und/oder ein oder mehrere gleiche und/oder weitere Amine gleichzeitig oder in beliebiger Reihenfolge zugesetzt und in Abwesenheit von Lösungsmitteln und Katalysatoren, mit dem Reaktionsprodukt der ersten Stufe umgesetzt werden.

2. Verfahren zur Herstellung von copolymeren Polypeptiden **dadurch gekennzeichnet, dass** in erster Stufe Glutaminsäure und/oder deren Derivate mit einer oder mehreren weiteren α-Aminosäuren und/oder deren Derivaten, in Abwesenheit von Lösungsmitteln und Katalysatoren, unter Kondensationsbedingungen umgesetzt werden und dass in zweiter Stufe eine oder mehrere Amine gleichzeitig oder in beliebiger Reihenfolge zugesetzt und in Abwesenheit von Lösungsmitteln und Katalysatoren, unter Kondensationsbedingungen, mit dem Reaktionsprodukt der ersten Stufe umgesetzt werden.

3. Verfahren zur Herstellung von copolymeren Polypeptiden **dadurch gekennzeichnet, dass** in erster Stufe Glutaminsäure und/oder deren Derivate mit einer oder mehreren weiteren α-Aminosäuren und/oder deren Derivaten und mit einem oder mehreren Aminen gleichzeitig oder in beliebiger Reihenfolge in Abwesenheit von Lösungsmitteln und Katalysatoren, unter Kondensationsbedingungen umgesetzt werden und dass in zweiter Stufe Glutaminsäure und/oder eine oder mehrere weitere Coaminosäuren und/oder deren Derivate und/oder ein oder mehrere gleiche und/oder weitere Amine gleichzeitig in beliebiger Reihenfolge zugesetzt und in Abwesenheit von Lösungsmitteln und Katalysatoren, unter Kondensationsbedingungen mit dem Reaktionsprodukt der ersten Stufe umgesetzt werden.

4. Verfahren gemäß Ansprüche 1 bis 3, **dadurch gekennzeichnet, dass** als Coaminosäuren Verbindungen der allgemeinen Formel (II) 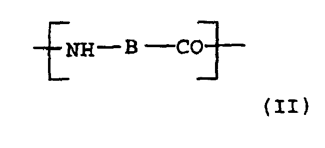
worin
B der Rest einer proteinogenen und/oder nicht proteinogenen Aminosäure ist, mitverwendet werden.

5. Verfahren gemäß Ansprüche 1 bis 4, **dadurch gekennzeichnet, dass** B der Rest aus den proteinogenen Aminosäuren Glycin, Alanin, Leucin, Isoleucin, Phenylalanin, Tyrosin, Serin, Cystein, Methionin, Glutaminsäure, Glutamin, Asparaginsäure, Asparagin, Lysin, Hydroxylysin, Arginin, Tryptophan, Histidin, Valin, Threonin, Prolin, Hydroxyprolin und/oder der nicht proteinogenen Aminosäuren β-Alanin, ω-Amino-1-alkansäuren ist.

6. Verfahren gemäß Ansprüche 1 bis 5, **dadurch gekennzeichnet, dass** als Amine Verbindungen der allgemeinen Formeln NH₂-R⁹ und/oder NH₂-X-R⁹ und/oder NH₂-(CH₂)ₙ-N(R¹⁰)(R¹¹) mitverwendet werden, worin
R⁹ gesättigte oder ungesättigte Alkylreste mit, 1 bis 24, vorzugsweise 6 bis 24 C-Atomen, R¹⁰, R¹¹ unabhängig von- einander gesättigte oder ungesättigte Alkylreste mit 1 bis 24 C-Atomen und/oder Hydroxyalkylreste,
X Oligo- oder Polyoxyalkylenketten mit 1 bis 100 Oxyalkyleneinheiten, vorzugsweise Ethlenoxydeinheiten und
n 2 bis 10, vorzugsweise 2 bis 4 bedeuten.

7. Polypeptide hergestellt gemäß einem der Verfahren gemäß Ansprüche 1 bis 6.

8. Polypeptide bestehend zu 30 bis 90 Gew.-% der vorhandenen Einheiten aus Struktureinheiten der allgemeinen Formel (I) und zu 70 bis 30 Gew.-% der allgemeinen Formel (II) 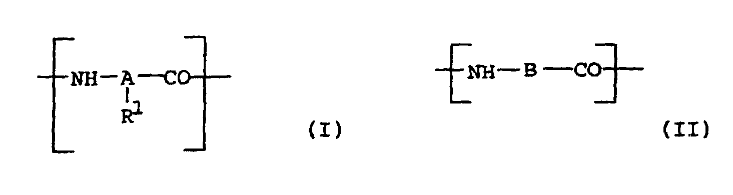
worin
A ein trifunktionelles Radikal mit drei C-Atomen und den Strukturen ist 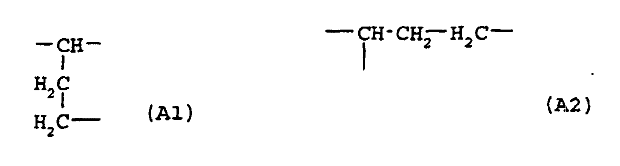
und in denen
R¹ die Bedeutung von R², R³ und R⁴ haben kann,
wobei
R² gleiche oder verschiedene Amidreste -C(O)NH-R⁹ mit
R⁹ geradkettige oder verzweigte, gesättigte und ungesättigte Alkylreste mit 1 bis 24, vorzugsweise 6 bis 24 C-Atomen oder Radikale der Struktur -C(O)NH-X-R⁹ sind, wobei
X eine Oligo- oder Polyoxyalkylenkette mit 1 bis 100 Oxyalkyleneinheiten, vorzugsweise Ethlenoxydeinheiten, ist,
R³ gleiche oder verschiedene, Amidreste -C(O)NH-(CH₂)ₙ-N(R¹⁰) (R¹¹) mit
n 2 bis 10, vorzugsweise 2 bis 4 und R¹⁰, R¹¹ unabhängig voneinander geradkettige oder verzweigte, gesättigte oder ungesättigte Alkylreste mit 1 bis 24 C-Atomen und/oder Hydroxyalkylreste sind
R⁴ die Bedeutung COO⁻X⁺, mit
X⁺, ein oder mehrere Reste aus der Gruppe der Alkali-, Erdalkalimetalle, Wasserstoff oder Ammonium, [NR⁵R⁶R⁷R⁸] ⁺, hat, worin
R⁵ bis R⁸ unabhängig voneinander Wasserstoff, Alkyl oder Hydroxyalkyl oder [NH₃-X-R⁹] , und/oder [NH₃-R⁹]⁺, und/oder [NH₃-(CH₂)ₙ-N(R¹⁰)(R¹¹)]⁺, bedeuten,
und mindestens jeweils ein Rest R¹ die Bedeutung von R², R³ und/oder R⁴ annehmen muss und die Einheiten [-NH-B-CO-] Bausteine aus der Gruppe der proteinogenen und/oder nicht proteinogenen Aminosäuren (H₂N-B-COOH) sind, worin B der Rest der jeweiligen Aminosäure ist.

## Claims

1. Process for the preparation of copolymeric polypeptides, **characterized in that** it comprises, in a first stage, reacting glutamic acid and/or derivatives thereof with amines in the absence of solvents and catalysts, under condensation conditions and, in a second stage, adding one or more further amino acids and/or derivatives thereof and/or one or more identical and/or further amines simultaneously or in any desired order, and reacting them with the reaction product of the first stage in the absence of solvents and catalysts.

2. Process for the preparation of copolymeric polypeptides, **characterized in that** it comprises, in a first stage, reacting glutamic acid and/or derivatives thereof with one or more further α-amino acids and/or derivatives thereof in the absence of solvents and catalysts, under condensation conditions and, in a second stage, adding one or more amines simultaneously or in any desired order, and reacting them with the reaction product of the first stage under condensation conditions and in the absence of solvents and catalysts.

3. Process for the preparation of copolymeric polypeptides, **characterized in that** it comprises, in a first stage, reacting glutamic acid and/or derivatives thereof with one or more further α-amino acids and/or derivatives thereof and with one or more amines simultaneously or in any desired order in the absence of solvents and catalysts, under condensation conditions and, in a second stage, adding glutamic acid and/or one or more further coamino acids and/or derivatives thereof and/or one or more identical and/or further amines simultaneously or in any desired order and, in the absence of solvents and catalysts, reacting them with the reaction product of the first stage under condensation conditions.

4. Process according to Claims 1 to 3, **characterized in that** the coamino acids co-used are compounds of the general formula (II) 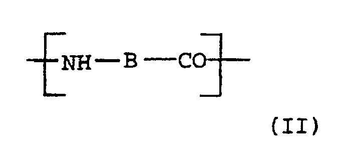
in which
B is the radical of a proteinogenic and/or non-proteinogenic amino acid.

5. Process according to Claims 1 to 4, **characterized in that** B is the radical from the proteinogenic amino acids glycine, alanine, leucine, isoleucine, phenylalanine, tyrosine, serine, cysteine, methionine, glutamic acid, glutamine, aspartic acid, asparagine, lysine, hydroxylysine, arginine, tryptophan, histidine, valine, threonine, proline, hydroxyproline and/or the non-proteinogenic amino acids β-alanine, ω-amino-1-alkanoic acids.

6. Process according to Claims 1 to 5, **characterized in that** the amines co-used are compounds of the general formulae NH₂-R⁹ and/or NH₂-X-R⁹ and/or NH₂-(CH₂)ₙ₋N(R¹⁰)(R¹¹), in which
R⁹ is saturated or unsaturated alkyl radicals having 1 to 24, preferably 6 to 24, carbon atoms, R¹⁰, R¹¹, independently of one another, are saturated or unsaturated alkyl radicals having 1 to 24 carbon atoms and/or hydroxyalkyl radicals,
X is oligo- or polyoxyalkylene chains having 1 to 100 oxyalkylene units, preferably ethylene oxide units and
n is 2 to 10, preferably 2 to 4.

7. Polypeptide prepared in accordance with one of the processes according to Claims 1 to 6.

8. Polypeptide wherein 30 to 90% by weight of the units present consist of structural units of the general formula (I) and 70 to 30% by weight consist of structural units of the general formula (II) 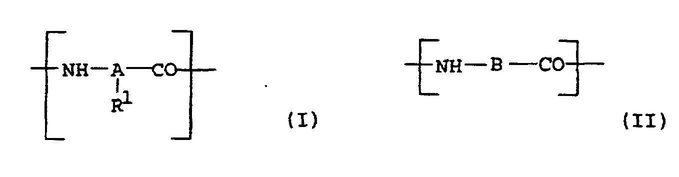
in which
A is a trifunctional radical with three carbon atoms and has the structures 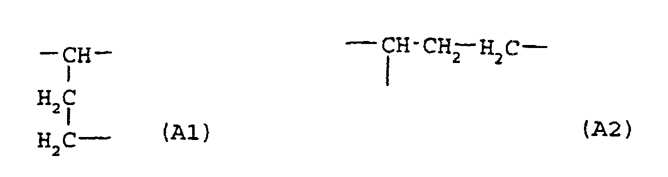
and in which
R¹ can have the meaning of R², R³ and R⁴,
where
R² is identical or different amide radicals -C(O)NH-R⁹ where
R⁹ is straight-chain or branched, saturated and unsaturated alkyl radicals having 1 to 24, preferably 6 to 24, carbon atoms or radicals of the structure -C(O)NH-X-R⁹, where
X is an oligo- or polyoxyalkylene chair having 1 to 100 oxyalkylene units, preferably ethylene oxide units,
R³ are identical or different amide radicals -C(O)NH-(CH₂)ₙ-N(R¹⁰) (R¹¹) where
n is 2 to 10, preferably 2 to 4 and R¹⁰, R¹¹, independently of one another, are straight-chain or branched, saturated or unsaturated alkyl radicals having 1 to 24 carbon atoms and/or hydroxyalkyl radicals
R⁴ has the meaning COO⁻X⁺, where
X⁺ is one or more radicals from the group of alkali metals, alkaline earth metals, hydrogen or ammonium, [NR⁵R⁶R⁷R⁸]⁺, in which
R⁵ to R⁸, independently of one another, are hydrogen, alkyl or hydroxyalkyl or [NH₃-X-R⁹)⁺, and/or [NH₃-R⁹]⁺, and/or [NH₃-(CH₂)ₙ-N(R¹⁰) (R¹¹)]⁺,
and in each case at least one radical R¹ must assume the meaning of R², R³ and/or R⁹ and the units [-NH-B-CO-] are building blocks from the group of proteinogenic and/or non-proteinogenic amino acids (H₂N-B-COOH), in which B is the radical of the respective amino acid.

## Revendications

1. Procédé pour la préparation de polypeptides copolymères, **caractérisé en ce que** dans une première étape on fait réagir de l'acide glutamique et/ou des dérivés de celui-ci, avec des amines, en absence de solvants et de catalyseurs, dans des conditions de condensation, et **en ce que** dans une deuxième étape on ajoute un ou plusieurs autres acides aminés et/ou dérivés de ceux-ci et/ou une ou plusieurs amines identiques et/ou différentes, simultanément ou dans un ordre quelconque et on les fait réagir avec le produit de réaction de la première étape, en absence de solvants et de catalyseurs.

2. Procédé pour la préparation de polypeptides copolymères, **caractérisé en ce que** dans une première étape on fait réagir de l'acide glutamique et/ou des dérivés de celui-ci, avec un ou plusieurs autres acides α-aminés et/ou dérivés de ceux-ci, en absence de solvants et de catalyseurs, dans des conditions de condensation, et **en ce que** dans une deuxième étape on ajoute une ou plusieurs amines, simultanément ou dans un ordre quelconque et on les fait réagir avec le produit de réaction de la première étape, dans des conditions de condensation, en absence de solvants et de catalyseurs.

3. Procédé pour la préparation de polypeptides copolymères, **caractérisé en ce que** dans une première étape on fait réagir de l'acide glutamique et/ou des dérivés de celui-ci, avec un ou plusieurs autres acides α-aminés et/ou dérivés de ceux-ci et avec une ou plusieurs amines, simultanément ou dans un ordre quelconque, en absence de solvants et de catalyseurs, dans des conditions de condensation, et **en ce que** dans une deuxième étape on ajoute de l'acide glutamique et/ou un ou plusieurs autres co-acides aminés et/ou dérivés de ceux-ci et/ou une ou plusieurs amines, identiques ou différentes, simultanément ou dans un ordre quelconque et on les fait réagir avec le produit de réaction de la première étape, dans des conditions de condensation, en absence de solvants et de catalyseurs.

4. Procédé selon les revendications 1 à 3, **caractérisé en ce qu'**on utilise simultanément en tant que co-acides aminés des composés de formule générale (II)
-[-NH-B-CO-]- (II)
dans laquelle
B est le reste d'un acide aminé protéinogène et/ou non protéinogène.

5. Procédé selon les revendications 1 à 4, **caractérisé en ce que** B est le reste des acides aminés protéinogènes glycine, alanine, leucine, isoleucine, phénylalanine, tyrosine, serine, cystéine, méthionine, acide glutamique, glutamine, acide aspartique, asparagine, lysine, hydroxylysine, arginine, tryptophane, histidine, valine, thréonine, proline, hydroxyproline et/ou des acides aminés non protéinogènes β-alanine, acides ω-amino-1-alcanoïques.

6. Procédé selon les revendications 1 à 5, **caractérisé en ce qu'**on utilise simultanément en tant qu'amines des composés de formules générales NH₂-R⁹ et/ou NH₂-X-R⁹ et/ou NH₂- (CH₂)ₙ-N(R¹⁰) (R¹¹), dans lesquelles
R⁹ représente des radicaux alkyle saturés ou insaturés, ayant de 1 à 24, de préférence de 6 à 24 atomes de carbone, R¹⁰, R¹¹ représentent indépendamment l'un de l'autre des radicaux alkyle saturés ou insaturés, ayant de 1 à 24 atomes de carbone et/ou des radicaux hydroxyalkyle,
X représente des chaînes oligo- ou polyoxyalkylène comportant de 1 à 100 motifs oxyde d'alkylène, de préférence oxyde d'éthylène et
n va de 2 à 10, de préférence de 2 à 4.

7. Polypeptides préparés conformément à l'un des procédés selon les revendications 1 à 6.

8. Polypeptides consistant à raison de 30 à 90 % en poids des motifs présents à base de motifs structuraux de formule générale (I) et à raison de 70 à 30 % en poids de formule générale (II) 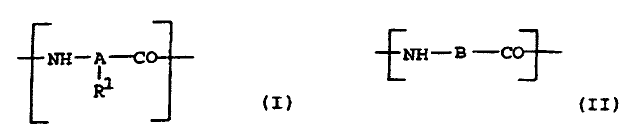
formules dans lesquelles
A est un radical trifonctionnel comportant trois atomes de carbone et ayant les structures 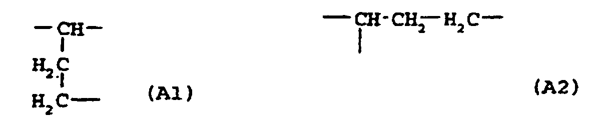
et dans lesquels
R¹ peut avoir la signification de R², R³ et R⁴,
R² représentant des restes d'amides -C(O)NH-R⁹ identiques ou différents, où
R⁹ représente des radicaux alkyle à chaîne droite ou ramifiée, saturés ou insaturés, ayant de 1 à 24, de préférence de 6 à 24 atomes de carbone, ou des radicaux de structure -C(O)NH-X-R⁹,
X étant une chaîne oligo- ou polyoxyalkylène comportant de 1 à 100 motifs oxyde d'alkylène, de préférence oxyde d'éthylène,
R³ représentant des restes d'amides -C(O)NH-(CH₂)ₙ-N(R¹⁰)(R¹¹) identiques ou différents, où
n va de 2 à 10, de préférence de 2 à 4, et R¹⁰, R¹¹ représentent, indépendamment l'un de l'autre, des radicaux alkyle à chaîne droite ou ramifiée, saturés ou insaturés, ayant de 1 à 24 atomes de carbone et/ou des radicaux hydroxyalkyle,
R⁴ ayant la signification de COO⁻X⁺, où
X⁺ représente un ou plusieurs radicaux choisis dans le groupe constitué par des métaux alcalins, des métaux alcalino-terreux, un atome d'hydrogène et un ion ammonium [NR⁵R⁶R⁷R⁸]⁺, où
R⁵ à R⁸ représentent, indépendamment les uns des autres, un atome d'hydrogène, un groupe alkyle ou hydroxyalkyle ou [NH₃-X-R⁹]⁺ et/ou [NH₃-R⁹]⁺ et/ou [NH₃-(CH₂)ₙ-N(R¹⁰)(R¹¹)]⁺,
et dans chaque cas au moins un radical R¹ doit avoir la signification de R², R³ et/ou R⁴ et les motifs [-NH-B-CO-] sont des composants choisis dans le groupe des acides aminés protéinogènes et/ou non protéinogènes (H₂N-B-COOH), où B est le reste de l'acide aminé respectif.
